# EUROPEAN PATENT SPECIFICATION

(11) **EP 2 410 839 B1**
(45) Date of publication and mention of the grant of the patent: **20.03.2013**
(21) Application number: 10701201.5
(22) Date of filing: 15.01.2010
(51) Int. Cl.: A01L 7/04

(54) **COVER FOR STUDDED HORSESHOES**
ABDECKUNG FÜR HUFEISEN MIT STOLLEN
COUVERCLE POUR FER À CHEVAL À CRAMPONS

(30) Priority: 16.01.2009 GB 0900698
(43) Date of publication of application: 01.02.2012
(73) Proprietor: Livingstone, Brian, Banbridge, County Down BT32 3QX (GB)
(72) Inventor: Livingstone, Brian, Banbridge, County Down BT32 3QX (GB)
(74) Representative: Waller, Stephen
(86) International application number: PCT/EP2010/000197
(87) International publication number: WO 2010/081710

(56) References cited:
- EP-A1- 1 277 399
- DE-A1- 10 125 940
- GB-A- 113 848
- GB-A- 138 190
- GB-A- 190 916 911
- GB-A- 191 113 951

## Description

This invention relates to a cover for studded horseshoes when fitted to hoofed animals.

In order to provide additional grip on grass surfaces during events, such as show jumping, eventing, dressage and polo, it is known to provide horseshoe studs in the horseshoes of a horse or pony.

Typically the farrier drills stud receiving holes through the metal horseshoes, typically one on either side of the shoe in the heel area. The holes are threaded to receive a correspondingly threaded metal stud. Each stud is typically 1cm in diameter and approximately 1cm long for ponies or 2cm long for horses. The studs typically have a pointed end to grip into the ground.

To insert each stud, firstly debris has to be removed from the respective threaded hole. Due to damage from grit and dirt, the hole usually needs to be rethreaded again before the stud can be screwed into the threaded hole. This process must be repeated at least eight times for each horse since there are typically two studs in each horseshoe.

Presently riders have to insert the studs upon arrival at the venue where the pony or horse is going to compete, such as a horse show or show jumping competition, because of the risk of a horse with the studs fitted causing injury to itself or others during transit and also possible damage to the floors and walls of the horse transporters. However, inserting the studs can be a difficult and dangerous task to undertake at such venue, especially with a young or excitable horse, due to the level of noise and distractions around the horse under such conditions, with many other horses close by and lots of commotion. It would be preferable and safer for both the horse and rider if the studs could be inserted before travelling, when the horse is in its own stable and is calm and relaxed.

According to a first aspect of the present invention there is provided a cover for a studded horseshoe fitted to a hoof of a hoofed animal, said cover being adapted to cover the studs and provide a ground engaging surface upon which the animal can walk.

Preferably said cover comprises a base of conventional horseshoe shape and having an upper surface having recesses or apertures formed therein for receiving the studs and a lower surface defining said ground engaging surface, and means for retaining the base onto a hoof of a hoofed animal.

Preferably the retaining means comprises a collar extending upwardly and inwardly from the base and having a shape complimentary to the side wall of the animals hoof. Preferably the collar extends from an outer peripheral edge of the base. Preferably the collar is integrally formed on the base.

Preferably said cover is formed from a resilient material, such as a plastic, rubber or leather. One suitable material may be polyurethane.

Preferably the base has a thickness equal or greater to the length of the studs which it is intended to cover. For example, for use with 2cm long hose studs, the base may be at least 2cm thick.

According to a second aspect of the present invention there is provided a method of fitting a cover to a studded horseshoe of a hoofed animal, said method comprising providing a length of resilient material defining a substantially horseshoe shaped base having an upper surface for abutting the horseshoe and a lower surface for engaging the ground, and means for retaining the base onto a hoof of a hoofed animal, forming recesses or apertures in the upper surface of the base for receiving the studs of the horse and applying the cover to the hoof of the animal.

Preferably said retaining means comprises a collar extending upwardly and inwardly from the base having a shape complimentary to the side wall of the animal's hoof.

Preferably said step of applying the cover to the hoof of the animal comprises lifting a hoof of the animal, inserting a first stud of the horseshoe into one of a corresponding recess of the cover, positioning the collar around the side wall of the animals hoof, and stretching the cover to fit a second stud of the horseshoe into a corresponding recess of the cover, whereby the cover is retained on the hoof.

The method may comprise providing an elongate strip of stock resilient material and cutting said length of resilient material from said elongate strip to suit the size of the horseshoe to which the cover is to be fitted. The elongate strip of resilient material may be provided in the form of a coil. The elongate strip of stock resilient material may be provided having a cross section defining said base and collar of the cover to be formed therefrom.

An embodiment of the invention will be now described, by way of example only, with reference to the accompanying drawings, in which:

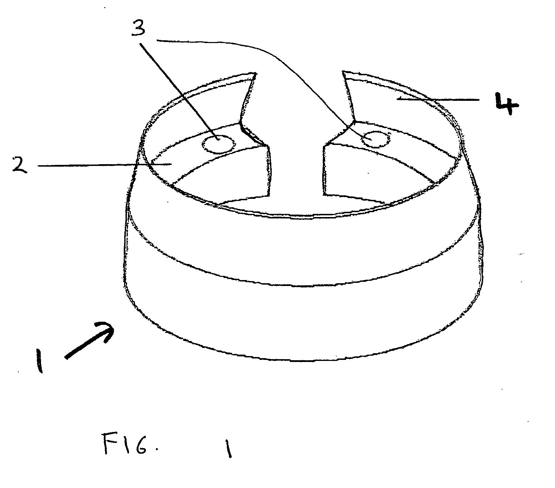

Figure 1 is a perspective view of a horseshoe cover according to an embodiment of the present invention;

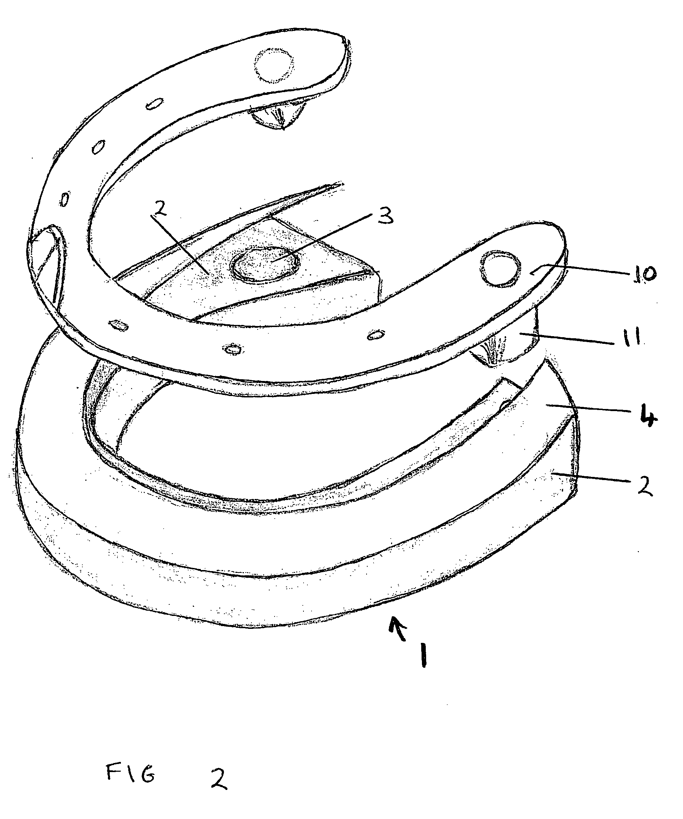

Figure 2 is a further perspective view of the cover of Figure 1;

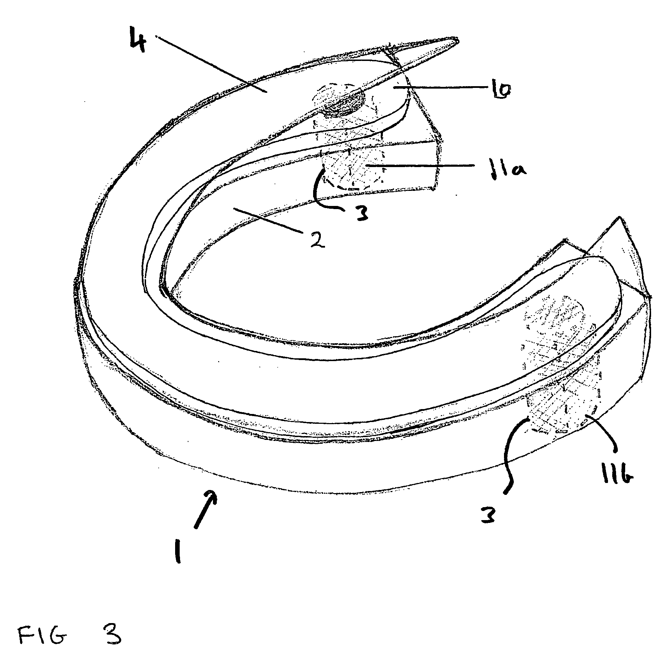

Figure 3 is a perspective view of the horseshoe cover of Figure 1 connected to a studded horseshoe;
Figure 4 is a side view of a horse's hoof fitted with a studded horseshoe on a hard surface;
Figure 5 is a side view of the cover of Figure 1 fitted to the hoof of a horse;

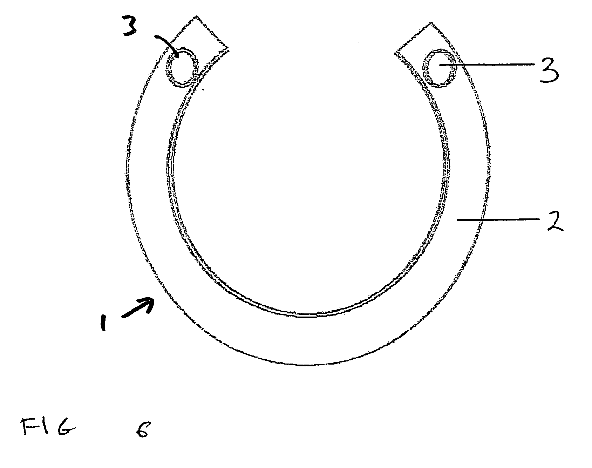

Figure 6 is a plan view of the underside of the cover of Figure 1;
Figure 7 is a perspective view of a horseshoe cover according to a further embodiment of the present invention;
Figure 8 is a perspective view of the horseshoe cover of Figure 7 from below;
Figure 9 is a plan view of the horseshoe cover of Figure 7 from below; and
Figure 10 is a further plan view of the horseshow cover of Figure 7 showing the locations where the cover may be cut to fit a smaller horseshoe.

As shown in the drawings, a cover 1 for studded horseshoes 10 in accordance with a first embodiment of the present invention comprises a one piece horseshoe shaped plastic body, for example formed from moulded or extruded polyurethane or PVC, comprising an annular base 2, having a ground engaging lower surface and an upper surface dimensioned to fit against the lower face of a horseshoe 10, the base 2 having stud receiving apertures 3 formed therein for receiving the studs 11 of the horseshoe 10, said apertures 3 being located to receive the studs 11 typically provided at the rear ends of the horseshoe 10 adjacent the heel region of the hoof 12. Typically two studs 11 are provided. However, the base 2 may be formed with any number of apertures 3 corresponding in number and positions to the studs 11 provided on the horseshoe 10 to which it is to be fitted. In the embodiment shown, the apertures 3 extend through the base 2 from the upper surface to the lower surface. Alternatively the apertures 3 may comprise blind holes extending from the upper surface of the base provided they are of sufficient depth to receive the studs 11 of the horseshoe 10.

The width of the base portion 2 of the cover 1 may be increased in the region of the apertures 3 for added strength. Alternatively the width of the base may be uniform along its length.

The thickness of the base 2 of the cover 1 is preferably substantially equal to or greater than the length of the studs 11 which it is intended to cover, so that the studs 11 do not extend beyond the base 2 of the cover 1. Typically the thickness of the base will be 20mm to suit the typical length of studs used for horses. Such thickness of cover will also suit the shorter 10mm studs used for ponies. Alternatively a 10mm thick version of the cover may be provided for use with ponies.

To retain the cover 1 on the hoof 12 of an animal, an upwardly and inwardly extending collar 4 is provided around the outer periphery of the upper surface of the base 2 of the cover 1, said collar 4 being integrally formed with the base 2. The collar 4 has a shape complimentary to the side wall of the animal's hoof 12 to grip the hoof 12 and retain the cover 1 thereon. The collar 4 is retained in contact with the side wall of the hoof 12 by the insertion of the studs 11 into the corresponding apertures 3 in the base 2 of the cover 1, as will be described below.

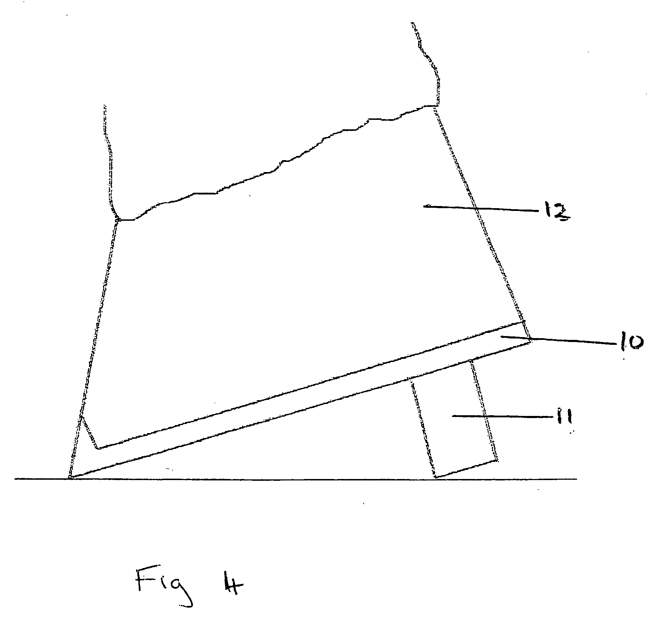

As shown in Figure 4, without the cover 1, if the horse tries to stand or walk on a hard surface, such as the floor of a horse transporter, with the studs 11 inserted into its horseshoes 10, the studs 11 prevent the shoe 10 from lying flat on the ground, leading to the risk of injury to the horse and damage to said hard surface.

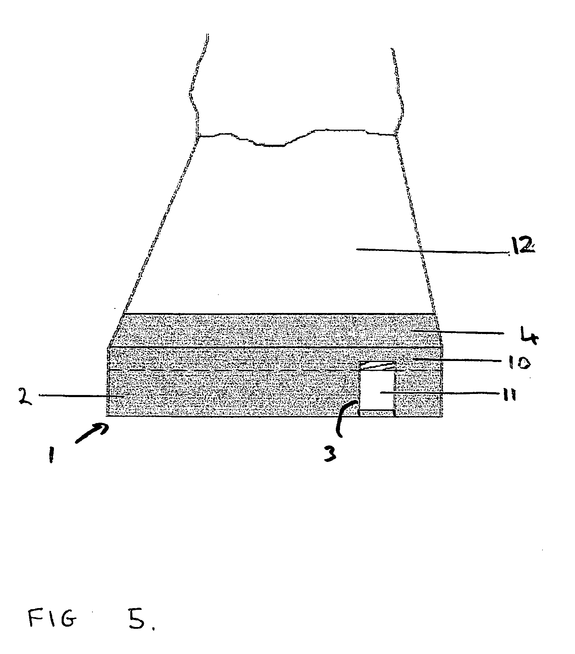

However, with the cover 1 fitted to the animal's hoof 12, as shown in Figure 5, the base 2 of the cover 1 acts as a spacer, providing a flat and level ground engaging surface for the hoof 12, protecting the studs 11 which are retained within the receiving apertures 3 in the cover 1 and avoiding stress on joints and tendons of the horse. Furthermore, the resilient material from which the cover 1 is formed provides enhanced grip upon hard surfaces and cushions the animal's hoof 12.

In use, the cover 1 is fitted to the animal's hoof 12, which has already been fitted with studded horseshoes 10 with studs 11 already inserted, by inserting one of the studs 11a into a corresponding aperture 3 and locating the collar 4 around the sides of the hoof 12. The cover 1 is then stretched to fit the collar 4 around the hoof 12 and the second stud 11 b can be inserted into its corresponding aperture 3 in the base 2 of the cover 1. The tension applied to the cover 1 by such action of stretching the cover 2 between the studs 11a,11b ensures that the collar 4 is firmly held against the side of the hoof 12, retaining the cover 1 on the hoof 12. Thus the cover 1 can be quickly and easily fitted to the hoof 12 without the need for any straps, buckles, adhesive or other fastening means.

When the horse has reached the venue where it is going to compete, the covers 1 can be quickly and easily removed by pulling one side of each cover 1 from one of the studs 11 to release the tension in the cover 1, permitting removal of the cover 1 from the hoof 12. This can be carried out quickly and easily, even where the horse is restless and agitated, with much less risk to the horse and rider than if the rider tries to insert the studs into the horse's horseshoes under the same conditions.

The cover can be provided ready made to suit a particular size of horseshoe, with the receiving apertures ready formed in positions and with depths adapted to suit the specific number and position of the studs. A range of different sized covers, of various thickness and having various receiving aperture arrangements, can be provided to suit a range of standard sized horseshoes.

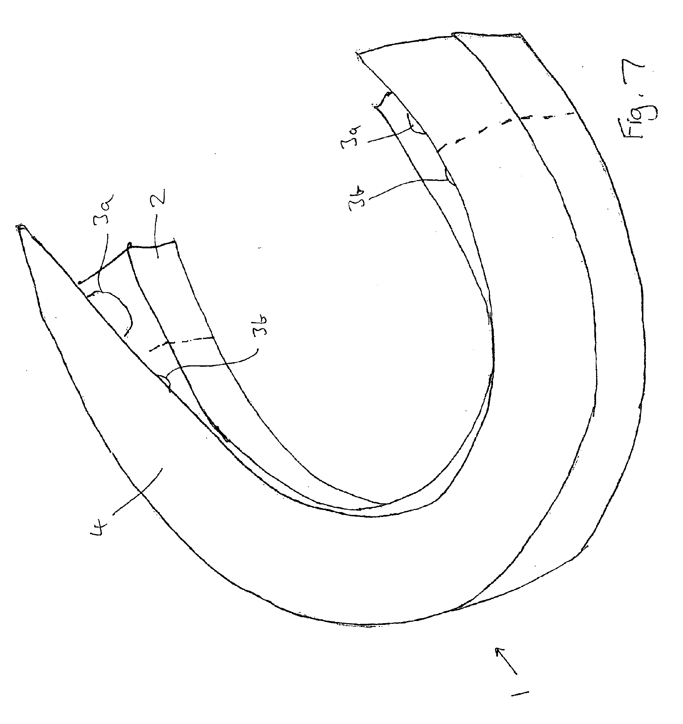

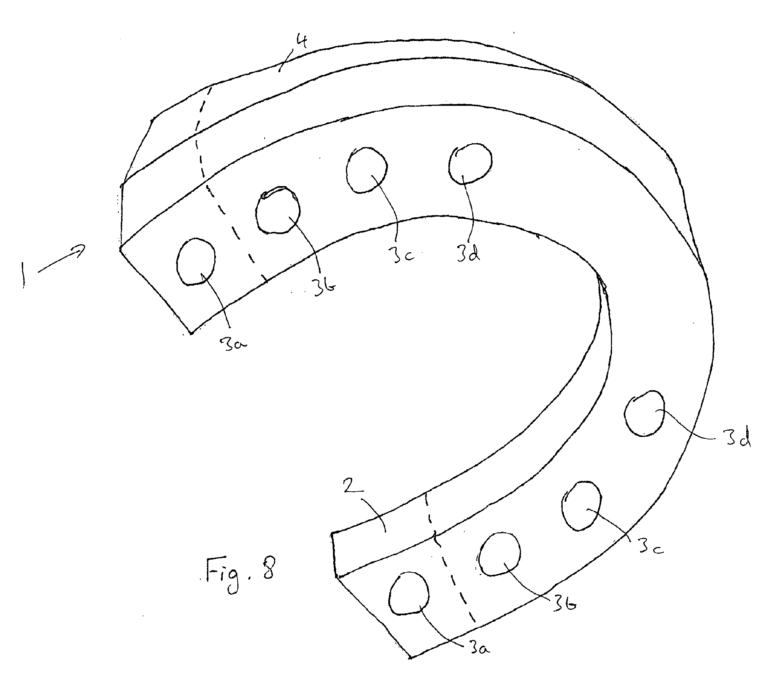

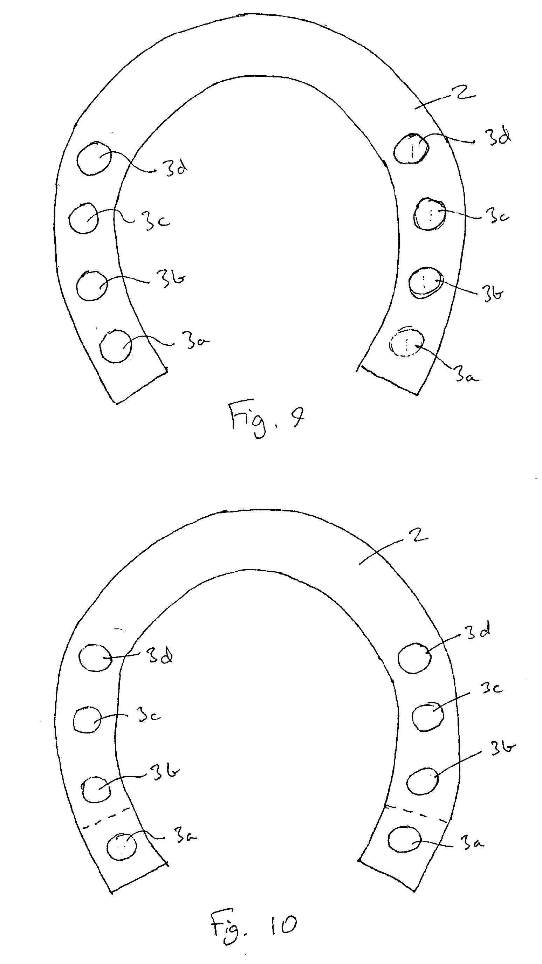

Alternatively, as illustrated in Figures 7 to 10, a plurality of spaced apertures 3a,3b,3c,3d may be provided in the base portion 2 of the cover 1, the cover 1 being designed such that the outermost apertures 3a substantially correspond to the position of the studs 11 on the largest horseshoe 10 to which the cover is intended to be fitted. Further apertures 3b,3c,3d, spaced inwardly from said outermost apertures 3a, for example every one or two centimetres along the base 2, may be provided to suit the studs 11 provided on smaller sizes of horseshoes such that the cover 1 can be adapted to fit a number of different sized shoes. Where one or more of said further apertures 3b,3c,3d are to be used, the excess length of the ends of the cover 1 beyond the selected apertures (for example 3b) may be cut off, for example along the dotted lines shown in Figures 7, 8 and 10.

In use, the cover 1 may be offered up to a horseshoe 10 fitted with studs 11 to assess which of the apertures 3a,3b,3c,3d are suitably located to receive the studs 11 and the excess material of the cover 1 beyond each of the selected apertures may be cut off so that the cover 1 is the same length as the horseshoe 10 to which it is to be fitted.

In a further embodiment (not shown), individual covers may be provided without the stud receiving apertures, which can be drilled through the base to suit the number and location of the studs on the particular horseshoe to which the cover is to be fitted. Pilot holes or indentations may be provided to assist formation of the apertures.

Alternatively a stock material in a coiled or straight form can be provided that can be cut to length to suit the size of a particular horseshoe and receiving apertures can be formed at desired locations corresponding to the position of the studs of the horseshoe.

The invention is not limited to the embodiment(s) described herein but can be amended or modified without departing from the scope of the present invention.

## Claims

1. A cover (1) for a studded horseshoe (10) fitted to a hoof (12) of an hoofed animal, said cover (1) being adapted to cover the studs (11) and provide a ground engaging surface upon which the animal can walk.

2. A cover as claimed in claim 1, wherein said cover (1) comprises a base (2) of conventional horseshoe shape and having an upper surface having recesses or apertures (3) formed therein for receiving the studs (11) and a lower surface defining said ground engaging surface, and means for retaining the base onto a hoof (12) of a hoofed animal.

3. A cover as claimed in claim 2, wherein the retaining means comprises a collar (4) extending upwardly and inwardly from the base (2) and having a shape complimentary to the side wall of the animals hoof (12).

4. A cover as claimed in claim 3, wherein the collar (4) extends from an outer peripheral edge of the base (2).

5. A cover as claimed in claim 3 or claim 4, wherein the collar (4) is integrally formed on the base (2).

6. A cover as claimed in any preceding claim, wherein said cover (1) is formed from a resilient material, such as a plastic, rubber or leather.

7. A cover as claimed in any preceding claim, wherein the base (2) has a thickness equal or greater to the length of the studs (11) which it is intended to cover.

8. A method of fitting a cover (1) to a studded horseshoe (10) of a hoofed animal, said method comprising providing a length of resilient material defining a substantially horseshoe shaped base (2) having an upper surface for abutting the horseshoe (10) and a lower surface for engaging the ground, and means for retaining the base (2) onto a hoof (12) of a hoofed animal, forming recesses or apertures (3) in the upper surface of the base (2) for receiving the studs (11) of the horseshoe (10) and applying the cover (1) to the hoof of the animal.

9. A method as claimed in claim 8, wherein said retaining means comprises a collar (4) extending upwardly and inwardly from the base (2) having a shape complimentary to the side wall of the animal's hoof (12).

10. A method as claimed in claim 9, wherein said step of applying the cover (1) to the hoof (12) of the animal comprises lifting a hoof of the animal, inserting a first stud (11a) of the horseshoe (10) into one of a corresponding recess (3) of the cover (1), positioning the collar (4) around the side wall of the animals hoof (12), and stretching the cover (1) to fit a second stud (11b) of the horseshoe (10) into a corresponding recess (3) of the cover (1), whereby the cover (1) is retained on the hoof (12).

11. A method as claimed in any of claims 8 to 10, comprising providing an elongate strip of stock resilient material and cutting said length of resilient material from said elongate strip to suit the size of the horseshoe to which the cover is to be fitted.

12. A method as claimed in claim 11, wherein the elongate strip of resilient material is provided in the form of a coil.

13. A method as claimed in claim 12 when dependent upon claim 9, wherein the elongate strip of stock resilient material is provided having a cross section defining said base (2) and collar (3) of the cover (1) to be formed therefrom.

## Patentansprüche

1. Abdeckung (1) für ein mit Stollen versehenes Hufeisen (10), das auf einem Huf (12) eines Huftiers befestigt wird, wobei die Abdeckung (1) angepasst ist, um die Stollen (11) zu bedecken und eine Bodenangriffsfläche bereitzustellen, auf der das Tier gehen kann.

2. Abdeckung nach Anspruch 1, bei der die Abdeckung (1) einen Boden (2) konventioneller Hufeisenform und eine Oberfläche, in der Aussparungen oder Öffnungen (3) zum Aufnehmen der Stollen (11) ausgebildet sind, sowie eine Unterfläche hat, die die Bodenangriffsfläche begrenzt, sowie Mittel zum Festhalten des Bodens auf einem Huf (12) eines Huftiers aufweist.

3. Abdeckung nach Anspruch 2, bei der das Haltemittel einen Bund (4) aufweist, der sich nach oben und nach innen von dem Boden (2) erstreckt und eine Form komplementär zu der Seitenwand des Tiefhufs (12) hat.

4. Abdeckung nach Anspruch 3, bei der sich der Bund (4) von einer äußeren Umfangskante des Bodens (2) erstreckt.

5. Abdeckung nach Anspruch 3 oder Anspruch 4, bei der der Bund (4) integriert an dem Boden (2) ausgebildet ist.

6. Abdeckung nach einem vorhergehenden Anspruch, bei der die Abdeckung (1) aus einem nachgiebigen Material wie zum Beispiel einem Kunststoff, Gummi oder Leder gebildet wird.

7. Abdeckung nach einem vorhergehenden Anspruch, bei der der Boden (2) eine Dicke größer oder gleich der Länge der Stollen (11) aufweist, die er abdecken soll.

8. Verfahren zum Befestigen einer Abdeckung (1) an einem mit Stollen versehenen Hufeisen (10) eines Huftiers, wobei das Verfahren umfasst, eine Länge aus einem nachgiebigen Material, das einen im Wesentlichen hufeisenförmigen Boden (2) mit einer Oberfläche zum Anliegen an dem Hufeisen (10) und einer Unterfläche zum Angreifen an dem Boden begrenzt, sowie Mittel zum Festhalten des Bodens (2) auf einem Huf (12) eines Huftiers bereitzustellen, Aussparungen oder Öffnungen (3) in der Oberfläche des Bodens (2) zum Aufnehmen der Stollen (11) des Hufeisens (10) auszubilden, und die Abdeckung (1) auf den Huf des Tiers aufzubringen.

9. Verfahren nach Anspruch 8, bei dem das Haltemittel einen Bund (4) aufweist, der sich nach oben und nach innen von dem Boden (2) mit einer Form erstreckt, die komplementär zu der Seitenwand des Tierhufs (12) ist.

10. Verfahren nach Anspruch 9, bei dem der Schritt zum Aufbringen der Abdeckung (1) auf dem Huf (12) des Tiers umfasst, einen Huf des Tiers anzuheben, einen ersten Stollen (11a) des Hufeisens (10) in eine einer entsprechenden Aussparung (3) der Abdeckung (1) einzuführen, den Bund (4) um die Seitenwand des Tierhufs (12) zu positionieren, und die Abdeckung (1) zu dehnen, um einen zweiten Stollen (11b) des Hufeisens (10) in eine entsprechende Aussparung (3) der Abdeckung (1) einzusetzen, wodurch die Abdeckung (1) auf dem Huf (12) festgehalten wird.

11. Verfahren nach einem der Ansprüche 8 bis 10, das umfasst, einen länglichen Streifen aus nachgiebigem Ausgangsmaterial bereitzustellen, und die Länge aus nachgiebigem Material von dem länglichen Streifen passend zu der Größe des Hufeisens abzuschneiden, an dem die Abdeckung angebracht werden soll.

12. Verfahren nach Anspruch 11, bei dem der längliche Streifen aus nachgiebigem Material in der Form einer Spirale bereitgestellt wird.

13. Verfahren nach Anspruch 12 wenn abhängig von Anspruch 9, bei dem der längliche Streifen aus nachgiebigem Ausgangsmaterial mit einem Querschnitt bereitgestellt wird, der den Boden (2) und den Bund (3) der aus demselben zu bildenden Abdeckung (1) begrenzt.

## Revendications

1. Couvercle (1) pour un fer à cheval à crampons (10) fixé sur un sabot (12) d'un animal ongulé, ledit couvercle (1) étant adapté pour recouvrir les crampons (11) et procurer une surface entrant en contact avec le sol sur laquelle l'animal peut marcher.

2. Couvercle selon la revendication 1, dans lequel ledit couvercle (1) comporte une base (2) en forme de fer à cheval traditionnel et ayant une surface supérieure ayant des évidements ou des ouvertures (3) formé(e)s dans celle-ci à des fins de réception des crampons (11) et une surface inférieure définissant ladite surface entrant en contact avec le sol, et un moyen permettant de retenir la base sur un sabot (12) d'un animal ongulé.

3. Couvercle selon la revendication 2, dans lequel le moyen de retenue comporte un collier (4) s'étendant vers le haut et vers l'intérieur depuis la base (2) et ayant une forme correspondant à la paroi latérale du sabot (12) de l'animal.

4. Couvercle selon la revendication 3, dans lequel le collier (4) s'étend depuis un bord périphérique extérieur de la base (2).

5. Couvercle selon la revendication 3 ou la revendication 4, dans lequel le collier (4) est formé d'une seule pièce sur la base (2).

6. Couvercle selon l'une quelconque des revendications précédentes, dans lequel ledit couvercle (1) est formé à partir d'un matériau élastique, tel du plastique, du caoutchouc ou du cuir.

7. Couvercle selon l'une quelconque des revendications précédentes, dans lequel la base (2) a une épaisseur égale ou supérieure à la longueur des crampons (11) qu'elle est prévue recouvrir.

8. Procédé de fixation d'un couvercle (1) sur un fer à cheval à crampons (10) d'un animal ongulé, ledit procédé comportant l'étape consistant à fournir une longueur de matériau élastique définissant une base (2) sensiblement en forme de fer à cheval ayant une surface supérieure à des fins de mise en butée dudit fer à cheval (10) et une surface inférieure à des fins de mise en contact avec le sol, et un moyen permettant de retenir la base (2) sur un sabot (12) d'un animal ongulé, l'étape consistant à former des évidements ou des ouvertures (3) dans la surface supérieure de la base (2) à des fins de réception des crampons (11) du fer à cheval (10) et l'étape consistant à poser le couvercle (1) sur le sabot de l'animal.

9. Procédé selon la revendication 8, dans lequel ledit moyen de retenue comporte un collier (4) s'étendant vers le haut et vers l'intérieur depuis la base (2) ayant une forme correspondant à la paroi latérale du sabot (12) de l'animal.

10. Procédé selon la revendication 9, dans lequel l'étape consistant à poser le couvercle (1) sur le sabot (12) de l'animal comporte l'étape consistant à soulever un sabot de l'animal, l'étape consistant à insérer un premier crampon (11a) du fer à cheval (10) dans l'un des évidements correspondants (3) du couvercle (1), l'étape consistant à positionner le collier (4) autour de la paroi latérale du sabot (12) de l'animal, et l'étape consistant à étirer le couvercle (1) à des fins de fixation d'un second crampon (11b) du fer à cheval (10) dans un évidement correspondant (3) du couvercle (1), ce par quoi le couvercle (1) est retenu sur le sabot (12).

11. Procédé selon l'une quelconque des revendications 8 à 10, comportant l'étape consistant à fournir une bande allongée de matériau élastique de stock et l'étape consistant à couper ladite longueur de matériau élastique en provenance de ladite bande allongée en fonction de la taille du fer à cheval sur lequel le couvercle doit être fixé.

12. Procédé selon la revendication 11, dans lequel la bande allongée de matériau élastique est fournie sous la forme d'une bobine.

13. Procédé selon la revendication 12, dépendant de la revendication 9, dans lequel la bande allongée de matériau élastique de stock est fournie avec une section transversale définissant ladite base (2) et ledit collier (3) du couvercle (1) devant être formés à partir de celui-ci.
